# EUROPEAN PATENT APPLICATION

(11) **EP 4 439 245 A1**
(43) Date of publication of application: **02.10.2024**
(21) Application number: 23192534.8
(22) Date of filing: 21.08.2023
(51) Int. Cl.: G06F 3/01, G06F 3/042

(54) **IMPROVED TOUCHLESS USER INTERFACE FOR COMPUTER DEVICES**

(30) Priority: 30.03.2023 EP 23165745
(71) Applicant: AMERIA AG, 69124 Heidelberg (DE)
(72) Inventor: METTER, Albrecht, 69120 Heidelberg (DE); SAVOTIN, Artem, 69124 Heidelberg (DE)
(74) Representative: Best, Bastian

(57) **Abstract**

The present invention concerns a method (200) for touchless control of a computer device (102), wherein the computer device (102) comprises and/or is communicatively coupled to display means (104), the method comprising: generating (202) at least one control command configured for moving at least one pointer (302) displayed on the display means (104) in accordance with a movement of at least one finger (304), preferably of the fingertip of the at least one finger (304), of a user, while the at least one finger (304) is distanced from the display means (104); and generating (206) a click command in response to a user action, wherein the user action comprises a pre-defined gesture in which the user moves the at least one pointer (302) over at least one user interface element (402) onto which the click command should be applied and causes the at least one pointer (302) to hover over the at least one user interface element (402) for a predetermined threshold time, after which the click command is generated.

## Description

### TECHNICAL FIELD

The present invention generally relates to techniques for touchless user interface control, and more particularly to touchless control of a computer device. One application of the disclosed techniques includes moving a pointer, such as a mouse pointer, in accordance with touchless gestures using finger movements, thereby providing a particularly efficient and ergonomic user experience.

### BACKGROUND

Electronic devices with display screens have become omnipresent in various areas of modern life. Typical examples of these devices include, without limitation, personal computers, laptops, tablets and smartphones. Devices like these usually provide a Graphical User Interface (GUI) allowing a user to interact with the device. It is common to use such electronic devices on their own, i.e., with the built-in display screen, but due to limitations in the display size it is also common to employ them in combination with other, in particular larger, display solutions, for instance by way of an external monitor, a television screen, a projector or the like.

Various input options are available to interface with the user, which are usually based on physical input devices. These physical input devices may be built-in, such as physical buttons, a keyboard, volume button(s), on-off button(s), or may be external physical input devices, such as a computer mouse, an input stylus, a trackpad, a trackball, a joystick, or the like. The mentioned physical input devices have in common that they are essentially used by a user's hand or hands.

However, external physical input devices have several drawbacks. They must be carried with the electronic device when travelling and may be easily forgotten or get lost. They can make the electronic device less portable and convenient to carry around, as they may require additional cables, power adapters, and space. They may require their own power source, which means the user needs to carry around an additional power adapter or rely on a nearby electrical outlet. They may require maintenance, such as cleaning or replacing batteries, which can add additional time and effort to the user's workflow. Adding too many external physical input devices can lead to a cluttered workspace, which can be distracting and make it harder to work efficiently.

One attempt to overcome the drawbacks of external physical input devices is based on the concept of a Touch User Interface (TUI). For example, a touchscreen may be used which allows the user to interact with content displayed on the screen by physically touching the screen with a fingertip, thereby replacing an external computer mouse. Operating systems (OS) typically provide application programming interfaces (API) which allow applications to integrate into and use the operating system's TUI. OS providers typically issue guidelines on how to design user interfaces, including TUIs, to meet their quality standards. Examples include Apple's Human Interface Guidelines (https://developer.apple.com/design/human-interface-guidelines), Google's Material Design (https://m3.material.io/), and Microsoft's Fluent (https://fluent2.microsoft.design/).

However, also touchscreens have several drawbacks. Touchscreens are prone to collecting fingerprints and smudges. Apart from hygienic concerns, this can be unsightly and make it difficult to see the contents on the screen. Touchscreens may not always accurately detect the user's touch, especially if the user has large or small fingers or is wearing gloves. Touchscreens can be more expensive than traditional screens, which can increase the overall cost of a device. Using a touchscreen can consume more battery power than using a traditional screen, as the screen needs to be constantly powered to detect the user's touch. Using a touchscreen can require the user to hold their arm in an uncomfortable position for extended periods of time, which can lead to fatigue and discomfort. Touchscreens may not be suitable for certain tasks, such as typing or precise drawing, which can require more precise input methods.

Furthermore, some OS user interfaces have traditionally been designed for use with physical input devices at a time when TUIs were not envisaged yet. As a result, their user interface elements are typically too small and not responsive for convenient and efficient use with touch control.

Accordingly, techniques for touchless user interface control have been devised. For example, US 2014/139430 A1 discloses a virtual touch method applied to a computer provided with a camera. The method includes defining a virtual touch plane in the space in front of the screen of the computer. A click is determined when a user's finger pierces through the virtual touch plane and then moves back again.

Another example is WO 2014/113454 A1 assigned to Leap Motion, Inc., which discloses techniques for dynamic free-space user interactions for machine control. A user can control an electronic device using gestures by interpreting the position, configuration or motion of control objects, such as a user's hand(s) or finger(s), in free space within a field of view of an image capture device.

In WO 2014/113454 A1, one type of "finger clicking" gesture to select a desired object requires the user to move the finger closer to the device to perform the clicking gesture. Another disclosed example is a clicking motion including penetration of a virtual surface construct immediately followed by withdrawal from the virtual surface construct. Furthermore, in WO 2014/113454 A1, an on-screen indicator may show in real time the degree of gesture completion, e.g., to let the user know when a particular action is accomplished. For example, as the user moves a finger closer to an electronic device to perform a clicking gesture, the device display may show a hollow circular icon that a rendering application gradually fills in with a color indicating how close the user's motion is to completing the gesture.

However, further improvements of the known touchless user interface techniques are possible, especially in terms of efficiency and ergonomic factor.

It is therefore a technical problem underlying the present invention to provide an improved user interface for controlling electronic devices, thereby overcoming the above-mentioned disadvantages of the prior art at least in part.

### SUMMARY OF INVENTION

The problem is solved by the subject-matter defined in the independent claims. Advantageous modifications of embodiments of the invention are defined in the dependent claims as well as in the description and the figures.

As a general overview, certain aspects of the present disclosure provide novel techniques for controlling a user interface of a computing device (or other types of electronic devices) in a touchless manner. Certain aspects disclosed herein relate to the touchless manipulation of a pointer on the display, and to techniques for initiating a click command. Certain aspects disclosed herein relate to the behavior of the user interface when the user engages with user interface elements. Certain aspects disclosed herein relate to touchless input gestures for engaging with the computing device. The provided aspects may be specifically useful to take account of the nuances of a typical laptop's hardware and/or software features, as well as to the user's hand position while using a laptop. Nevertheless, the aspects disclosed herein are widely applicable to any type of computing device, as will become apparent from the following description. In summary, the disclosed aspects may provide, individually or in combination, better usability of user interface elements compared to touch-based interfaces, in particular with regards to click accuracy, need of concentration and ease of understanding.

In one aspect of the invention, a method for touchless control of an electronic device, in particular a computer device, is provided. The method may be computer-implemented. The electronic device, in particular computer device, may comprise and/or may be communicatively coupled to display means, and/or sensor means and/or an optional keyboard. The keyboard may be a physical keyboard, which may be integrated into the electronic device, in particular computer device or which may be an external periphery device of the electronic device, in particular computer device, or a virtual keyboard, e.g., generated on a projection surface using projection means or on a touchscreen. The sensor means may be configured for observing an interaction space. The interaction space may be arranged at least partially above an interaction surface. The interaction surface may comprise a surface of the keyboard, a tabletop, in particular a tabletop on which the electronic device, in particular computer device, is arranged, and/or a lap of a user, in particular a user of the electronic device, in particular computer device.

The method may comprise determining, based at least partially on sensor data captured using the sensor means, a movement of at least one finger, preferably of the fingertip of the at least one finger, of the user. The determining may take place while the user's hands are arranged at least partially above the interaction surface, such as above the keyboard surface. The method may comprise generating at least one control command. The generating may be performed in response to the determining. The at least one control command may be configured for manipulating content displayed on the display means in accordance with the movement of the at least one finger.

Accordingly, content displayed on the display means can be manipulated by the user by moving the at least one finger, in particular the fingertip thereof. This way, the computer device can be efficiently controlled. The manipulation of the content and thus the controlling of the computer device is touchless, i.e., it takes place while the at least one finger is distanced from the display means and/or does not touch the display means. This is not only beneficial in terms of hygiene but may also be more convenient than touch-based interfaces, as the user can control the device without having to reach the hand or arm out to touch the display.

An electronic device may be understood as a tool or apparatus that relies on electronic components to operate. In this context, an electronic component is any part that uses electrical signals to perform a specific function. A computer device is one type of electronic device, in particular being an electronic device that is specifically designed to execute various computing tasks.

Computer devices may come in many forms, including desktop computers, laptops, tablets, and smartphones. Also, other types of devices such as television sets, in particular so-called smart TVs, set-top-boxes and gaming devices, also referred to as gaming consoles, are examples of computer devices. Furthermore, any type of other physical apparatus with at least some computing functionality may be referred to as a computer device, such as without limitation a computer device which is built into another higher-level electronic device such as a Virtual Reality device, a car, a vehicle and/or the like. Generally speaking, a computer device typically includes at least one central processing unit (CPU), at least one memory component, one or more input/output devices, and possibly various other components.

Said at least one central processing unit (CPU), at least one memory component and one or more input/output devices may function as follows: The CPU may be the central processing unit of the computer device and may be responsible for performing all the instructions and calculations that the device needs to execute. It may be essentially the "brain" of the computer device, and it may interpret and execute commands/instructions provided to it by a user or a device's software. The memory component of a computer device may be responsible for storing data and instructions that are required for the device's operation. This memory may be divided into two categories: temporary and permanent. Temporary memory may be used to store data that is needed only for a short period, while permanent memory may be used for long-term storage. Input/output devices may be used to interact with the computer device. Common input devices include mouses, trackpads, trackpoints, keyboards, touchbars and touchscreens, while common output devices include monitors, speakers, and printers. These devices allow the user to input data and commands into the device and receive output from the device. Various other components may be included in a computer device, such as graphics processing units, network interface cards, and storage devices like hard drives and solid-state drives. These components help to expand the capabilities of the device and allow it to perform more complex tasks. In summary, a computer device is an electronic device that is specifically designed to execute various computing tasks. It comprises components that are necessary for its operation.

One type of computer device is a portable computer device, also referred to simply as portable computer. Generally speaking, a portable computer may also be referred to as a laptop computer, a notebook computer, or in short as a laptop or a notebook. A portable computer is to be understood as a computer designed to be relatively easily moved from one place to another, as opposed to stationary computers designed to remain at a single location such as desktops, workstations and server racks. A portable computer is typically a portable personal computer (PC), while touchscreen-based handheld devices such as tablets, phablets and smartphones are called mobile devices instead. The portable computer may be configured to run on a desktop operating system such as Microsoft Windows, macOS or Linux, unlike mobile devices which typically run on mobile operating systems such as Android or iOS. One type of portable computer to which the concepts disclosed herein are applicable is, without limitation, the portable computer disclosed in European patent application no. 23173257.9 titled "PORTABLE COMPUTER WITH VIRTUALIZED HUMAN-MACHINE INTERFACE", the contents of which are incorporated herein by reference. It should be understood, however, that the concepts disclosed herein are equally applicable to other types of portable computers, or computing devices in general.

A user may interact with said electronic device, in particular with said computer device, using one or more physical input devices, examples of which are provided further below. A physical input device may be any device that allows a user to input data and/or commands into a computer device or other electronic device. Physical input devices may come in a wide variety of forms for various purposes and use cases. Some examples of a physical input device include a computer mouse, a keyboard, a touchpad, a trackpad, a trackpoint, a joystick, a gaming console controller, a remote control and a touchscreen. Keyboards are typically used to input text and/or commands into a computer device or electronic device. A keyboard may be built-in in the electronic device, particularly computer device, may be an external physical keyboard or may be a virtual keyboard provided, e.g., by way of a projection onto a surface or by display on a touchscreen. Computer mice and touchpads are regularly used to move a mouse pointer on a screen and select items, while joysticks are used for gaming and other applications that require precise control.

The term display means includes any means for presenting visual content to a user. This may include a broad range of technologies and formats, including electronic display screens, projection systems, projection surfaces, holographic systems, Augmented Reality devices, Virtual Reality devices, and/or the like.

Electronic display screens are perhaps the most common type of display means in use nowadays. These can include LCD, LED, OLED, Retina, E-Ink and other types of displays, which are used in devices ranging from laptops, smartphones and smartwatches to televisions and large format displays. These screens typically rely on backlighting or other forms of illumination to produce an image and may be capable to offer a wide range of color and resolution capabilities.

Projection systems are another type of display means, which use light to project an image onto a projection surface such as a screen or wall. These can include traditional projectors, as well as newer technologies such as laser projection and digital light processing (DLP). Projection systems are often used in settings such as movie theaters, conference rooms, and large spaces. Projection surfaces may come in various shapes, sizes, and materials, and can be used for a wide range of applications. The most common type of projection surface is a plain, preferably white, wall. It is a simple and inexpensive way to project images, videos, and presentations. Another type of projection surface is a projector screen. Projector screens are designed specifically for projection purposes. They come in various sizes and materials, such as vinyl, fabric, and glass beads. They are often used for applications where a particularly high quality of a projection is desired. Another type of projection surface is a transparent projection surface. Transparent projection surfaces are made of glass or acrylic and are often used for advertising or digital signage. They are common for storefront displays, museums and galleries where a user can see both the projection and an exhibit behind it.

Holographic display means are a type of display means which uses complex optics to produce three-dimensional images that appear to float in space. They may be used for a range of applications, including product visualization, scientific visualization, and entertainment.

Augmented Reality devices and Virtual Reality devices may comprise display means different to each other to create their respective immersive experiences. Augmented Reality devices typically use a transparent display means such as a head-mounted display (HMD) or a smart glass. These display means allow the user to see the real world while overlaying virtual objects on top of it. The virtual objects can be projected onto the transparent display means using various techniques such as beam-splitting, waveguide optics, or holographic displays. The virtual objects are then aligned with the real-world environment in real-time, creating the illusion that the virtual objects are a part of the real world. On the other hand, Virtual Reality devices typically use opaque displays such as a head-mounted display or a projection system. A Virtual Reality device, in particular the display means of a Virtual Reality device, may block out the real world and immerse the user in a virtual environment. The most common type of display means used in Virtual Reality devices is a high-resolution LCD or OLED screen.

The term touchless should be understood in relation to the electronic device or computer device. This means that a touchless interaction or a touchless user input does not necessarily mean that the user does not touch any objects or components of the electronic device or computer device in general, but that for the specific desired user interaction or user input, no touching of an input device intended for this purpose is required.

The term user interaction may be understood to include any user input provided by a user person. The user may provide said user input with the intention to cause the electronic device to perform an action and/or to control the electronic device.

The term sensor means may include one or more sensor devices. Groups of the one or more sensor devices may build a sensor array. Thus, an exemplary sensor means may comprise at least two sensor arrays, each sensor array including at least two sensor devices. The sensor devices may be devices capable of capturing sensor data, e.g., imaging data, but may also refer to supporting devices which support other sensor devices in enhancing the precision of capturing sensor data, e.g., an infrared projector. For example, one sensor array may include two infrared cameras and one infrared laser projector, thus the sensor array comprising three sensor devices in total.

The sensor means may in particular be 3D imaging sensor means which include sensor devices that are, alone or in combination with other sensor devices, capable of capturing three-dimensional images of an environment, in particular of objects such as a user's hand. There are several different types of 3D imaging sensor means, including time-of-flight (TOF) sensors, structured light sensors, and stereo vision sensors. TOF sensors work by emitting a light pulse and measuring the time it takes for the light to bounce back from an object, enabling them to create a three-dimensional map of the object's shape and distance. One example for said TOF sensors is a LiDAR sensor. Structured light sensors use a pattern of light and shadow, e.g., a projected pattern projected by a laser projector, and at least one camera to create a three-dimensional map of an object. Stereo vision sensors use at least two cameras to create a three-dimensional image by comparing the images captured by each camera. The cameras may for example be infrared cameras. The projector may for example be an infrared laser projector. Preferably, a projector is configured to emit light having a wavelength which is outside the human visible areas of wavelengths, thus not disturbing the user. Using a projector projecting a pattern generally increases the accuracy of captured sensor data.

The term interaction space may be understood as comprising or being a 3D space in the nearfield of the electronic device in which the user may provide touchless user input. Alternatively or additionally, the term interaction space may be understood as a space within which user interaction is captured. The space may be a space between the user and the electronic device, e.g., when the user faces a display means of the electronic device, the space being located between the user's face and the display means. Generally, the interaction space may be within or equal to the field of view of the sensor means. The interaction space may have a spatial orientation and/or location that is particularly convenient for the user person for providing touchless user input. It may be provided that the user person is provided with a control option to adjust the spatial orientation and/or location of the interaction space.

As already mentioned further above, the interaction space may be arranged a least partially above the keyboard or keyboard area. More precisely, the arrangement may be above a keyboard surface of the keyboard. The interaction space may capture the entire area above the keyboard surface, or it may capture only a relevant portion thereof, or it may even capture an area greater than the keyboard surface, such as next to the electronic device. Accordingly, the interaction space captures at least part of the space in which the user's hands are normally placed when performing a typing activity.

The term sensor data may be understood to include data collected by the sensor means, in particular captured by the sensor means. The sensor means preferably includes at least one imaging sensor device, as mentioned above, thus in this case, the sensor data includes image data. In a preferred embodiment, the sensor means is configured to capture a 3D image of the environment in the nearfield of the electronic device. The 3D image may be generated based on layering various sensor data from different sensor devices. In particular, the sensor means may include a depth sensor, such as at least one infrared sensor, facilitating creation of the 3D image. Said captured sensor data may be processed by the electronic device, in particular by a processing unit of the electronic device, in order to generate control commands corresponding to the user input lying in the sensor data.

In one aspect of the present invention, the step of manipulating content displayed on the display means comprises moving at least one pointer in accordance with the movement of the at least one finger. Accordingly, user interface elements, such as buttons, text boxes, scrollbars and the like, can be precisely, efficiently and comfortably reached by the user using the movement of the at least one finger which causes a corresponding movement of the at least one pointer. The user interface pointer may comprise a graphical representation.

The at least one pointer may comprise a mouse pointer. The graphical representation may comprise an arrow, a hand, or the like, which may be animated. In general, the graphical representation of the mouse pointer may comprise any graphical shape and/or behavior which the skilled person is familiar with in connection with mouse pointers. Accordingly, the user can efficiently switch between a typing mode in which the user enters text with the keyboard and a gesture mode, which in this case is a mouse mode in which the user controls the mouse pointer. As a non-limiting example, the user may select formatting settings of the typed text or perform any function of a text processing application in-between typing activities.

The at least one pointer may comprise a user interface pointer. The graphical representation may comprise a circle, rectangle, or other geometric form, which may optionally be animated. Accordingly, the user can efficiently switch between a non-gesture-control mode, e.g., a typing mode in which the user enters text with the (physical or virtual) keyboard and a gesture mode, which may be similar to the mouse mode mentioned above except for the graphical representation of the pointer.

The at least one pointer may comprise a text input cursor. The graphical representation may comprise a vertical line, such as "|", also called a "caret" which may be animated. In general, the graphical representation of the text input pointer may comprise any graphical shape and/or behavior which the skilled person is familiar with in connection with text input pointers. Accordingly, the user can efficiently switch between a typing mode in which the user enters text with the keyboard and a gesture mode, which in this case is a text input cursor mode in which the user controls the text input cursor. As non-limiting examples, the user may move the cursor somewhere else, for example to continue adding text in another location of a document, and/or may select a text portion, for example to delete the text portion or to apply formatting options and/or may perform any function of a text processing application in-between typing activities.

In one aspect of the present invention, the method comprises generating a click command in response to a user action. The user action may comprise a pre-defined user action.

Generally, the user action may comprise a pre-defined gesture involving any type of user input object which may comprise one finger, multiple fingers, e.g., two fingers, a whole hand, a palm of a hand, a hand or part thereof covered in a glove or mitten, or the like. in one example, the user action may comprise a pre-defined gesture using (only) the at least one finger which is used to control the at least one pointer. To this end, the method may comprise detecting the pre-defined gesture, e.g., based at least in part on sensor data captured using sensor means (as explained above). Accordingly, the method may be based on detecting a particular posture or physiological configuration of the at least one finger. This may lead to a particularly precise and robust determination of the pre-defined gesture, as opposed to those prior art approaches which simply detect whether the user moves the fingertip towards the screen and optionally retracts is again to trigger a click command.

For example, the gesture may comprise a straightening of the at least one finger, a snapping of the at least one finger in the general direction of the display means, a bending of the at least one finger, similar to a "pistol trigger" movement, and/or any other gesture of the at least one finger which is suitable for indicating a click event. Using the same finger for both pointing and clicking may provide a particularly intuitive, convenient and efficient human-machine interface and may be particularly useful in scenarios where a very high precision of the touchless input is not a priority.

The user action may comprise a pre-defined gesture using the at least one finger which is used to control the at least one pointer and at least one other finger and/or portion of the same hand. Also here, the method may comprise detecting the pre-defined gesture, e.g., based at least in part on sensor data captured using sensor means (as explained above). Accordingly, the method may be based on detecting a particular posture or physiological configuration of the at least one finger and the at least one other finger and/or portion of the same hand. This may lead to a particularly precise and robust determination of the pre-defined gesture, as opposed to those prior art approaches which simply detect whether the user moves the fingertip towards the screen and optionally retracts is again to trigger a click command.

For example, the gesture may comprise the user moving and/or snapping the tip of the thumb towards the index finger. Triggering the click command with the thumb, or more generally with a finger or portion of the user's hand which is not the pointing finger, may provide a particularly precise touchless input because the pointing finger can remain relatively stable while the click triggering movement is performed.

The user action may comprise a pre-defined gesture using the at least one finger which is used to control the at least one pointer and at least one other finger and/or portion of the other hand of the user.

The user action may comprise a pre-defined gesture in which the user moves the at least one pointer over at least one user interface element onto which the click command should be applied and causes the at least one pointer to remain, i.e., hover, over the at least one user interface element for a predetermined threshold time, after which the click command is generated. The click command may be generated, preferably programmatically and/or automatically, after the at least one pointer has hovered over the at least one user interface element for the predetermined threshold time without the user having to perform a clicking gesture. In particular, it may not be required that the user performs an explicit clicking gesture such as pushing the finger towards the screen, or pushing and retracting the finger, as used in the prior art cited further above.

This way to generate a click command, which is also referred to as "autoclick" herein, may be particularly comfortable and efficient especially, but not only, in-between typing activities, i.e., when the user's hands are arranged essentially in a typing pose, because in such a pose the range of motion of the finger in the general direction of the display means may be limited. This way to generate a click command may also be particularly precise because the pointing finger can remain completely motionless, thereby allowing the user to point very precisely, while the click is triggered without the need for any movement of the user.

In one aspect of the present invention, the above-described "autoclick" functionality may be deactivated in a default interface pointer control mode and may be activated only when the user moves the finger towards the display device. With this optional feature, inadvertent clicks can be prevented, and the user can precisely signal when a click should be done, namely only when the user has moved the finger closer to the screen as in the default position.

In one aspect of the present invention, the method may comprise starting a timer when the user moves the at least one pointer over the at least one user interface element onto which the click command should be applied. The timer may run as long as the at least one pointer remains, i.e., hovers, over the at least one user interface element. The timer may be stopped and/or reset when the user moves the at least one pointer away from the at least one user interface element. When the timer reaches the predetermined threshold time, the click command may be generated as explained above.

The predetermined threshold time may have a pre-configured value which may be set depending on a weighing of design principles. If the threshold time is rather short, the click command will be generated quickly after the user has moved the at least one pointer over the at least one user interface element. This allows users which are familiar with the autoclick functionality to operate the user interface very efficiently but may increase the risk of unintended click inputs for less experienced users. If the threshold time is rather long, it may take a while until the click command is generated after the user has moved the at least one pointer over the at least one user interface element. This may decrease the risk of false click inputs for less experiences users but may lead to a less satisfying user experience for users which are familiar with the autoclick functionality.

It has been found out that a practical threshold time is, for example, between 0.3 and 0.7 seconds, more preferably between 0.4 and 0.6 seconds. In a preferred implementation, the threshold time may be approximately 0.5 seconds, which has shown to be a good trade-off of the design principles described above. Furthermore, experiments have shown that a threshold time of 1 second or longer may be too long for most users, although it is a possible setting as well.

The predetermined threshold time may be user-configurable, similar to the mouse sensitivity in most modern operating systems.

In one aspect of the present invention, the method may comprise generating at least one control command for displaying, on the display means, a visual indication of the remaining threshold time until the click command will be generated. Displaying the visual indication may comprise animating the at least one user interface element onto which the click command should be applied. Animating the at least one user interface element may comprise animating a frame of the at least one user interface element, in particular filling up the frame, in accordance with the remaining threshold time. Accordingly, the visual indication may help the user understand and thus properly use the autoclick functionality. In particular, since the visual indication provides immediate feedback on the remaining time until the click command will be generated, the user will less likely try to initiate the click command by way of an explicit clicking gesture, such as by moving the finger towards the screen, which may deteriorate the pointing precision, or even by touching the screen, which has all the negative consequences outlined in the introduction section further above. This way, the visual indication assists the user in performing the technical task of operating the computer user interface by means of a continued and/or guided human-machine interaction process.

Generally speaking, a click command as described herein may trigger any kind of user interaction as needed in the particular application or as supported by the corresponding user interface element. For example, a click command may cause a selection of a button, a selection of a text field (possibly followed by a text entry via voice input), or any other user interface interaction. Further examples will become apparent when considering the list of examples of user interface elements further below. The threshold time described in the present disclosure may have a different setting for different user interface elements.

It should be understood that the three ways of generating a click command described above, i.e., with (i) a pre-defined gesture using (only) the at least one finger which is used to control the at least one pointer, (ii) a pre-defined gesture using the at least one finger which is used to control the at least one pointer and at least one other finger and/or portion of the same hand, and (iii) the autoclick functionality, are alternative solutions to the problem of providing an improved human-machine interface.

In one aspect of the present invention, a method for touchless control of an electronic device, in particular a computer device is provided. The method may be computer-implemented. The electronic device, in particular computer device may comprise and/or be communicatively coupled to display means. The electronic device, in particular computer device may include any other characteristic disclosed in relation with other aspects of the present invention. Also, the method may include any steps disclosed in relation with other aspects of the present invention. The method may comprise generating at least one control command. The at least one control command may be configured for moving at least one pointer displayed on the display means in accordance with a movement of at least one finger, preferably of the fingertip of the at least one finger, of a user, while the at least one finger may be distanced from the display means.

The method may comprise generating at least one control command for displaying a hover state of at least one user interface element. The hover state may be displayed at least while the at least one pointer hovers over the at least one user interface element. The step of generating the at least one control command for displaying the hover state may be combined with any of the other aspects disclosed herein.

A user interface element, which may also be referred to as input element, control element or affordance herein, should be understood as any element that can be selected by the user or with which the user can interact to perform a function associated with the computing device. Therefore, such an element may also be termed a user-selectable element. A user interface element may provide users with visual cues or interactive options, making it clear what actions are possible and how they can interact with the interface. This may enhance the usability and user experience of the touchless user interface. Generally speaking, the touchless control methods disclosed herein may support any type of user interface element which may normally be found in a touch-based user interface and/or a traditional user interface to be controlled with physical input devices. Non-limiting examples of user interface elements include:
- Buttons: Buttons are one of the most recognizable affordances in user interfaces. They are usually depicted as distinct, clickable elements, often with labels or icons, indicating the action they perform when selected.

- Icons: Icons may comprise visual representations of actions, functions or applications.
- Sliders: Sliders may allow users to adjust a value or setting by dragging a handle along a track. They are often used for volume control, brightness adjustments, and other continuous adjustments.
- Switches/Toggles: These may comprise binary controls that users can turn on or off. They are commonly used for enabling or disabling features or settings.
- Menus: Menus may comprise interactive lists or collections of options that expand or pop up when selected, providing users with a selection of choices.
- Context menus: A user action in a touchless user interface resembling a traditional right-click may reveal context-sensitive menus with relevant actions or options.
- Scrollable areas: User interfaces often include scrollable content, which allows users to move through content that exceeds the screen's visible area.
- Text fields: Text fields may allow users to input text.
- Radio buttons and checkboxes: These may be used in forms to allow users to select one option from a group (radio buttons) or multiple options (checkboxes).
- Zoomable objects: These may provide users with the ability to perform specific actions like zooming in on images or navigating through content.
- Drag-and-droppable objects: Users may be able to drag items on the screen and drop them into specific areas, triggering various actions.
- Toolbars: Toolbars typically contain icons or buttons representing frequently used functions, placed within easy reach for quick access.
- Hyperlinks: In digital interfaces (websites, applications, etc.), hyperlinks may allow users to navigate between different pages or sections.

A hover state of a user interface element should be understood as a visual change or behavior that occurs when the user hovers the pointer over that particular element. It provides interactive feedback to the user, indicating that the user interface element is interactive and can be engaged with. Hover states may be used in digital user interfaces interfaces, such as, e.g., websites, applications, and desktop software. By displaying the hover state at least while the at least one pointer hovers over the at least one user interface element, immediate feedback is provided to the user, conveying that the user interface element is interactive and encouraging the user to explore and engage with the user interface element. This enhances the overall user experience by making the user interface more intuitive, responsive to user actions, and predictable.

In one aspect of the present invention, the hover state of the at least one user interface element may be displayed already when the at least one pointer comes near the at least one user interface element, i.e., when the at least one pointer has not yet reached the user interface element. This way, the user interface element's behavior can somewhat predict or anticipate the user's aim to hover over or otherwise engage with it. This may further enhance the predictability, intuitiveness, and thus overall usability of the user interface.

In one aspect of the present invention, the at least one user interface element comprises, or is associated with, a hovering area. The hovering area is preferably invisible. The hovering area is preferably larger than a visible area of the at least one user interface element. The hover state of the at least one user interface element may be displayed when the at least one pointer enters the hovering area. Accordingly, when the at least one pointer approaches the user interface element and hovers over the hovering area not reaching the visible area of the user interface element yet, the user interface element may nevertheless already start displaying its hover state instead of a default state.

In one aspect of the present invention, displaying the hover state may comprise at least partly modifying an appearance of the at least one user interface element. This may relate to a size and/or shape and/or color of the at least one user interface element.

In particular, changing the size of the user interface element, especially making it become larger, in the hover state, may be particularly useful in the touchless user interface scenario considered herein. This is because user interface elements known from traditional user interfaces which are to be used with physical input devices typically have a size that is optimized for the physical input devices, making them difficult to engage with using touchless gesture control for some users. Therefore, while there is no need to make a user interface element larger when in the hover state in a traditional user interface, it is very advantageous in a touchless interface because the user interface element can become big enough to be conveniently and precisely engaged with by touchless user input. At the same time, the size of the user interface element during a default state, i.e., when not hovered over, may resemble that of a user interface element found in traditional user interfaces, thereby making efficient use of the user interface screen estate. This latter aspect also allows the methods disclosed herein to be seamlessly integrated into traditional user interfaces which are originally designed for use with physical input devices.

In one aspect of the present invention, the at least one user interface element may change its size to at least 10mm in diameter, which is particularly useful for touchless user input.

While changing the size may be a particularly preferred type of modification of the user interface element's appearance, various other types of modifications of the appearance are possible, which may be provided in addition or alternatively to the size change. Non-limiting examples include:
- Color change: The user interface element's color may change to a different shade, indicating interactivity. For example, buttons might change color when hovered to show that they can be clicked.
- Highlighting: The user interface element may become visually highlighted, making it stand out from the rest of the user interface.
- Underlines or text decoration: User interface elements, in particular links or clickable elements, may display an underline or other text decoration when hovered.
- Animations: Animations, such as subtle movements or transitions, may be triggered when the user interface element is hovered.
- Tool tips: Additional information or a brief description of the user interface element's purpose might appear in a tool tip when hovered.

In one aspect of the present invention, displaying the hover state may comprise at least partly modifying an appearance of the at least one pointer. This may be provided in addition or alternatively to the above-described modification of the appearance of the at least one user interface element. Just as one example, the at least one pointer may change its size, e.g., it may become larger, and/or it may change shape such as becoming a hand icon for clickable elements.

In one aspect of the present invention, at least partly modifying the appearance of the at least one user interface element may be performed depending on a direction from which the at least one pointer has approached the at least one user interface element. Accordingly, a particularly dynamic way of hovering may be provided. For example, the user interface element may show its effects and/or modify its appearance into a specific location of the user interface element, e.g., from where the user's interaction is coming or directed to.

In one aspect of the present invention, any of the methods disclosed herein may comprise generating at least one control command for playing a sound in response to generating the click command and/or when the at least one user interface element is in the hover state. The sound may depend on and/or evolve with regards to the interacting distance to help the user to find the right interaction distance.

In one aspect of the present invention, any of the methods disclosed herein may comprise determining at least one of a plurality of different touchless gesture inputs performed by the user in an interaction space. The interaction space may be a three-dimensional interaction space. The plurality of different touchless gesture inputs may comprise one or more of the following touchless gestures: swiping; pinching/spreading; pointing; tapping; passive hand finger sign; active hand finger sign; writing; drawing; mouse control. These gestures may be performed on their own or in combination with an activation of an additional user interface element, such as a button.

According to another aspect of the invention, any of the methods disclosed herein may use a touchless gesture input system comprised in or associated with the computer device. The touchless gesture input system may comprise sensor means (also referred to as sensing means) configured to observe at least part of an interaction space, in particular at least part of the (three-dimensional) interaction space mentioned above. The sensing means may in principle comprise any sensor technology. In one particular aspect of the present disclosure, the sensing means comprises at least a first and a second sensor arrangement. The first and the second sensor arrangements may be respectively arranged at or near opposing upper corners of the top cover. Exemplary sensor arrangements are disclosed in European patent application no. 23165748.7 titled "SENSOR ARRANGEMENT FOR TOUCHLESS CONTROL OF A COMPUTER DEVICE, SENSOR SYSTEM AND ELECTRONIC DEVICE", European patent application no. 23165755.2 titled "SENSOR ARRANGEMENT FOR TOUCHLESS CONTROL OF A COMPUTER DEVICE, SENSOR SYSTEM AND ELECTRONIC DEVICE", the contents of which are incorporated herein by reference. Techniques for providing a touchless input interface using multiple sensor devices are disclosed in EP 4 083 757 A1 titled "TOUCHLESS INPUT INTERFACE FOR AN ELECTRONIC DISPLAY USING MULTIPLE SENSORS", the contents of which are incorporated herein by reference.

In one aspect of the present invention, a data processing apparatus, preferably an electronic device, more preferably a computer device, is provided comprising means for carrying out a method according to any of the aspects of the present invention disclosed herein. While a portable computer is described in certain aspects and/or embodiments herein, aspects of the present disclosure which have been described above and which will be further exemplified below may be provided in alternative devices, including without limitation any type of data processing apparatus, electronic device, computing device, personal computer (PC), stationary computer (e.g., workstation, desktop, server rack), special-purpose device (e.g., gaming console, set-top-box), handheld device, mobile device (e.g., tablet, phablet, smartphone) or electronic device embedded in a technical device or system (e.g., car, machine). This applies to individual aspects disclosed herein as well as to particular combinations of the aspects disclosed herein.

In one aspect of the present invention, a computer program or a computer-readable medium may be provided, having stored thereon a computer program, the computer program comprising instructions which, when the program is executed by a computer, cause the computer to carry out a method according to the first aspect of the present invention. The computer program may be provided as software and/or firmware executable on a computer. The computer program may be provided as a distinct product, e.g., for download from a server, app store, or the like or on a non-transitory storage medium. The computer program may be provided as part of the data processing apparatus, i.e., it may be (pre)installed on the data processing apparatus. The computer program may execute at least some of the functions remotely with respect to the data processing apparatus, such as on a computing device connected to the data processing apparatus via a wired or wireless network connection.

The data processing apparatuses, methods and/or computer programs may comprise and/or provide an application programming interface (API). The API may be configured for allowing an external application and/or device to use the computer program, such as by invoking an executing of one or more functions and/or by receiving responses. Examples of an external application include without limitation an operating system or an application executing on the data processing apparatus. Examples of an external device include without limitation a sensor device and/or a component of the data processing apparatus such as a touchscreen, touchless gesture input system, or the like.

### BRIEF DESCRIPTION OF THE DRAWINGS

The disclosure may be better understood by reference to the following drawings:

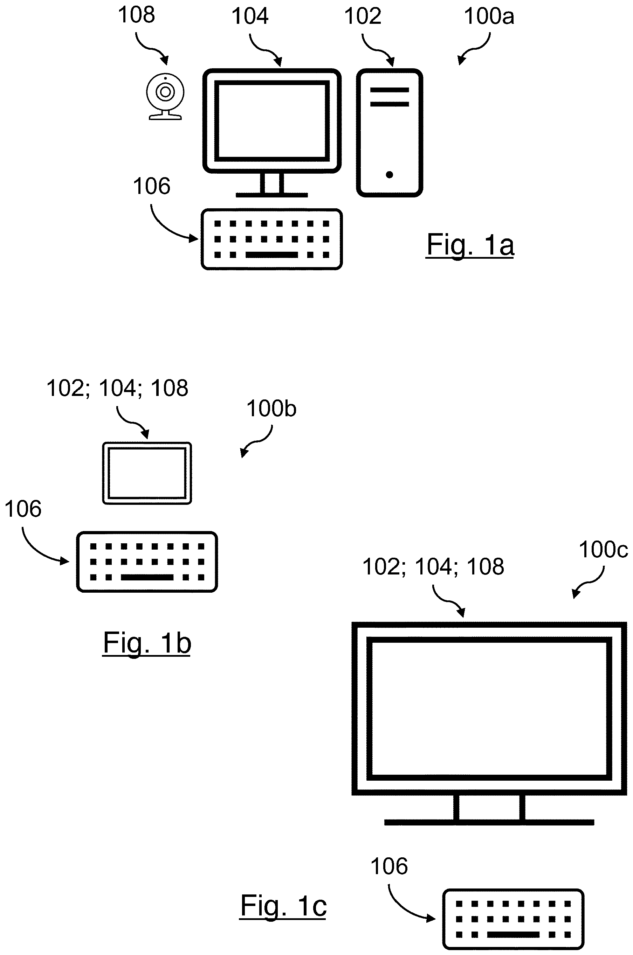

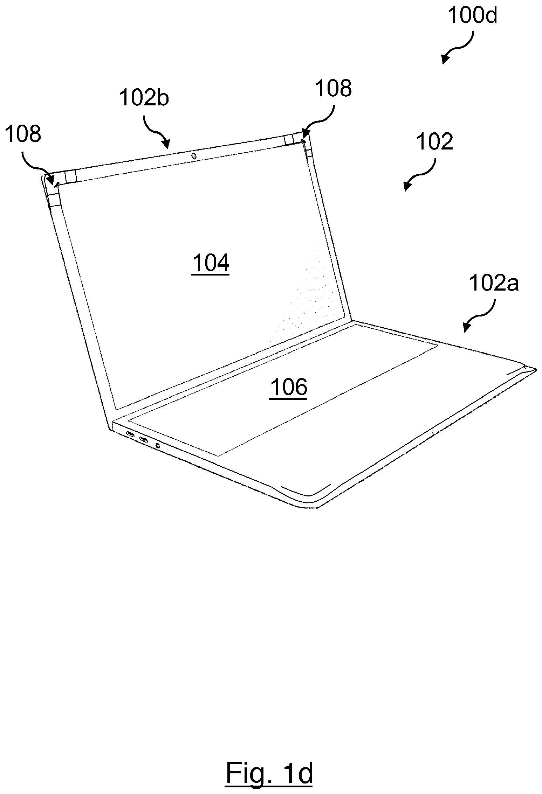

- Fig. 1 a:: A computer device in accordance with a first exemplary embodiment of the invention.
- Fig. 1b:: A computer device in accordance with a second exemplary embodiment of the invention.
- Fig. 1 c:: A computer device in accordance with a third exemplary embodiment of the invention.
- Fig. 1 d:: A computer device in accordance with a fourth exemplary embodiment of the invention.
- Fig. 2:: A method for touchless control of a computer device relating to "autoclick" functionality in accordance with embodiments of the invention.
- Fig. 3a:: A schematic view of a first hand posture for moving a pointer on a display with touchless finger pointing in accordance with embodiments of the invention.
- Fig. 3b:: A schematic view of a second hand posture for moving a pointer on a display with touchless finger pointing in accordance with embodiments of the invention.
- Fig. 4a:: A schematic representation of a user interface element in accordance with embodiments of the invention.
- Fig. 4b:: A schematic representation of a visual indication of a remaining threshold time until a click command will be generated in accordance with embodiments of the invention.
- Fig. 4c:: Another schematic representation of a visual indication of a remaining threshold time until a click command will be generated in accordance with embodiments of the invention.
- Fig. 5:: A method for touchless control of a computer device relating to an alternative way of generating a click command in accordance with embodiments of the invention.
- Fig. 6:: A method for touchless control of a computer device relating to another alternative way of generating a click command in accordance with embodiments of the invention.
- Fig. 7:: A method for touchless control of a computer device relating to displaying a hover state of a user interface element in accordance with embodiments of the invention.
- Fig. 8:: A schematic representation of user interface elements including a user interface element in a hover state in accordance with embodiments of the invention.

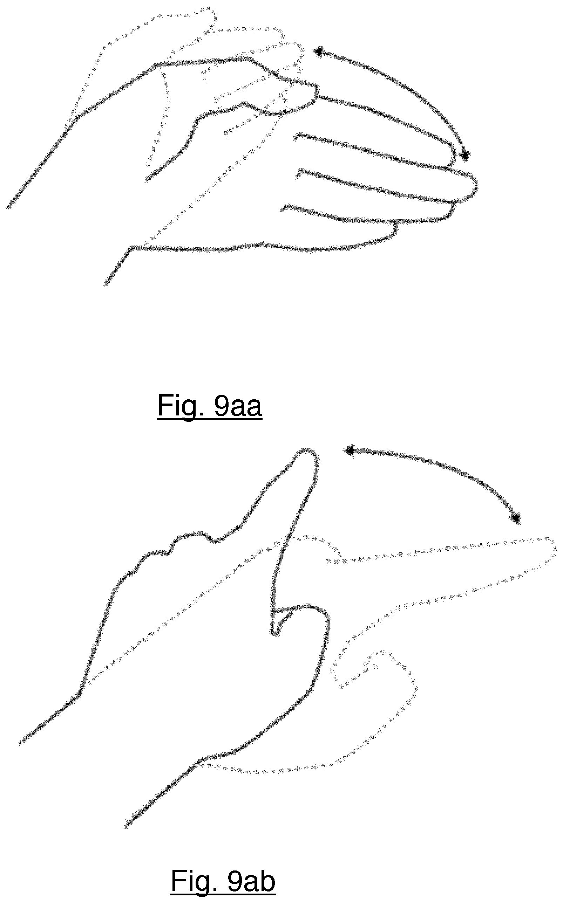

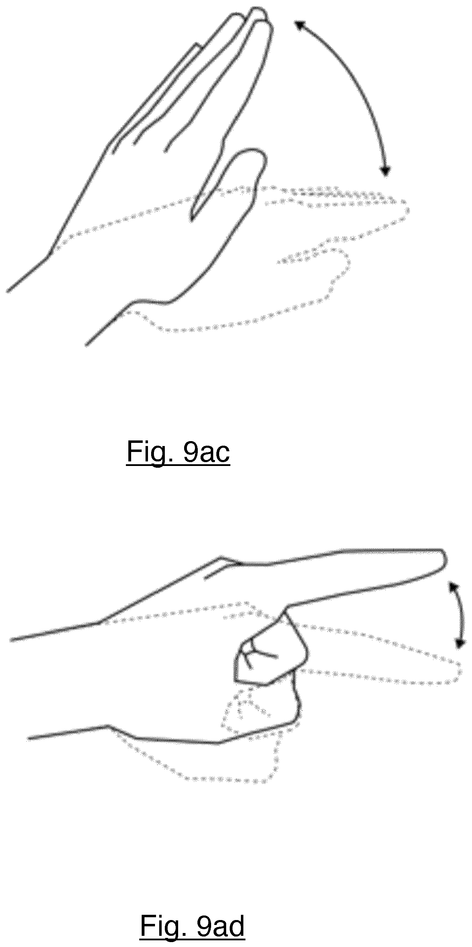

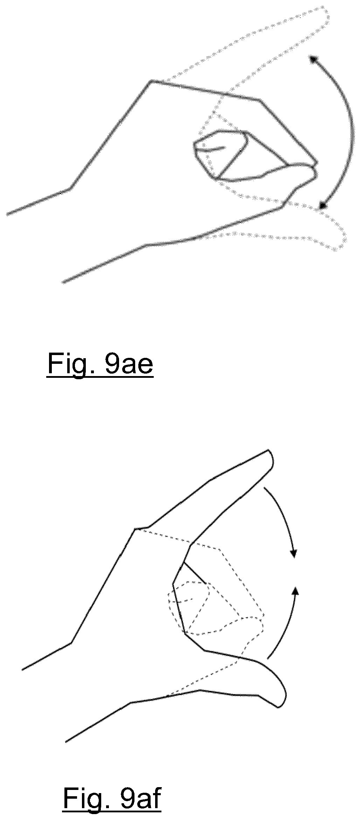

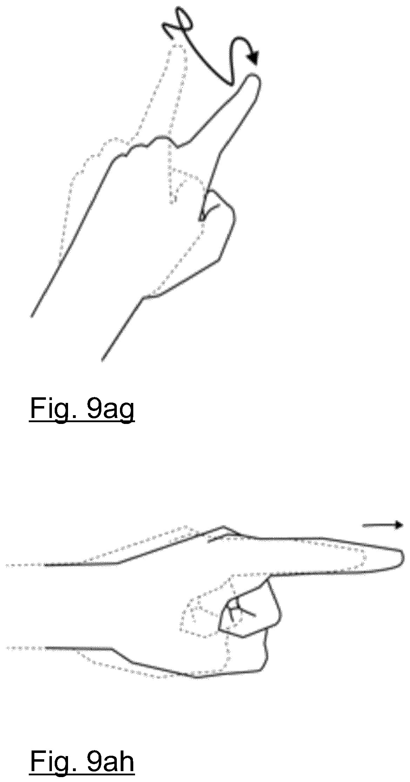

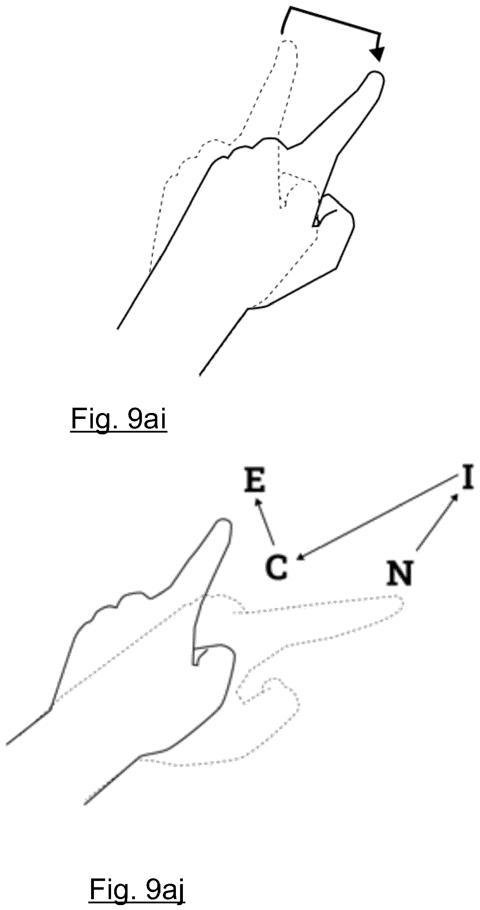

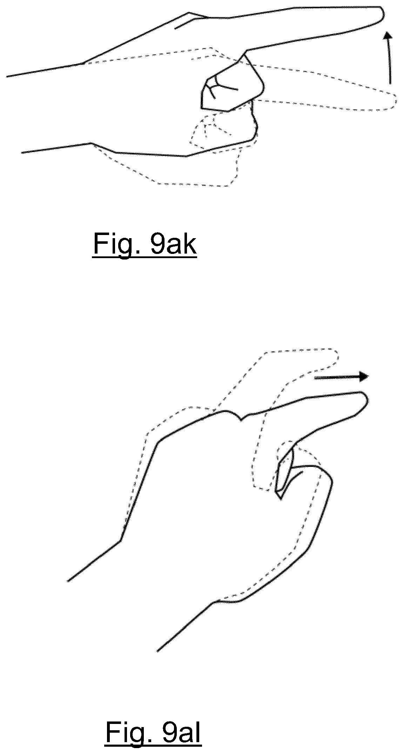

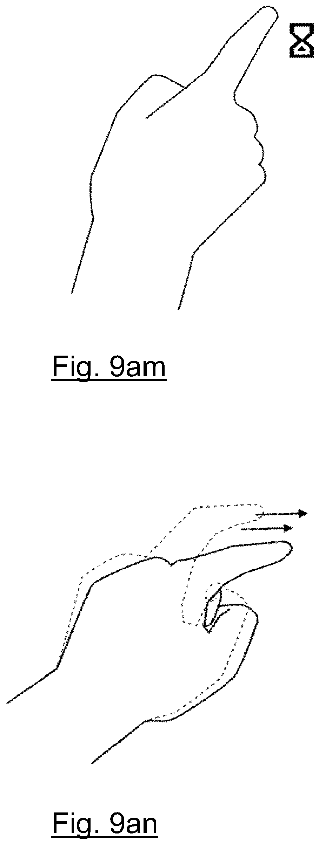

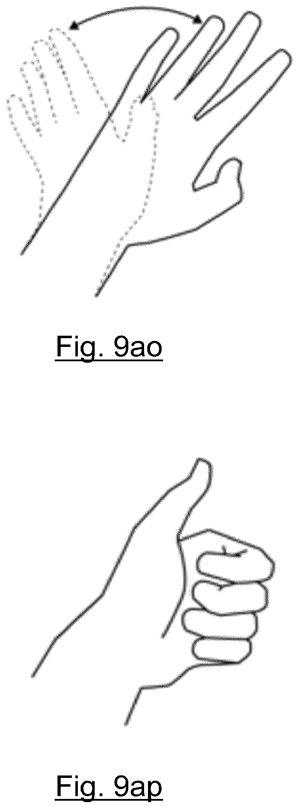

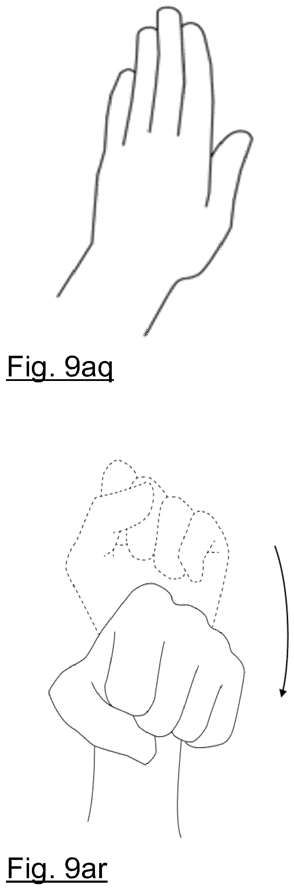

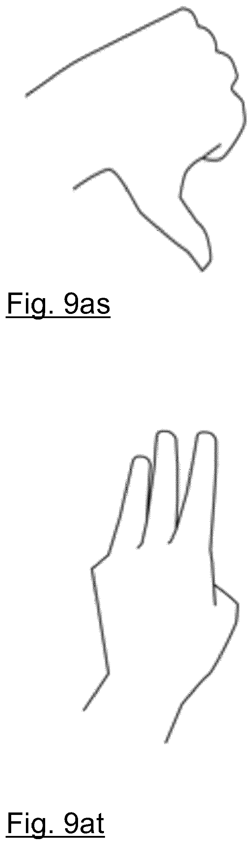

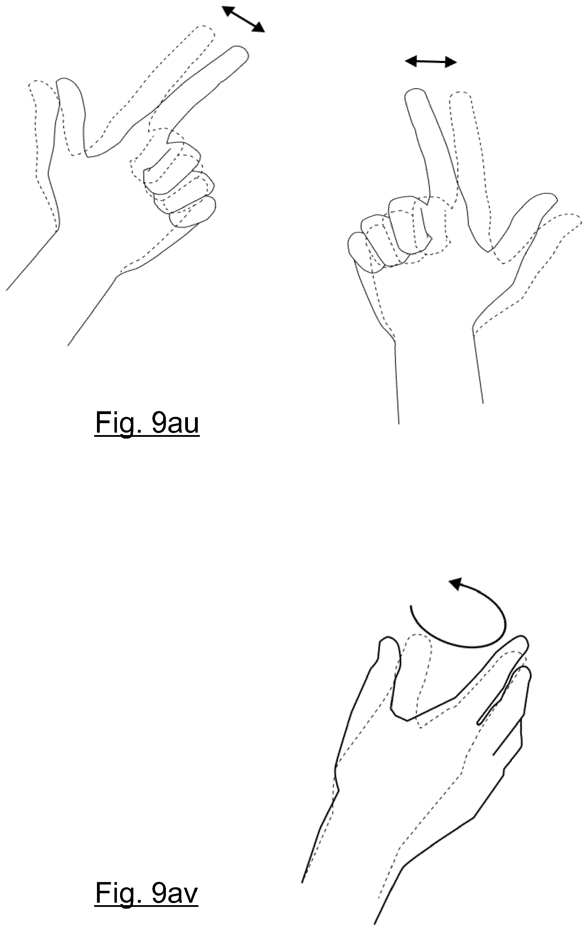

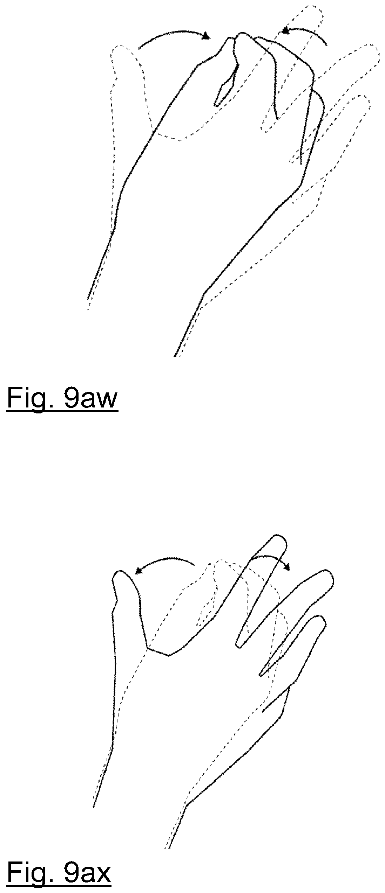

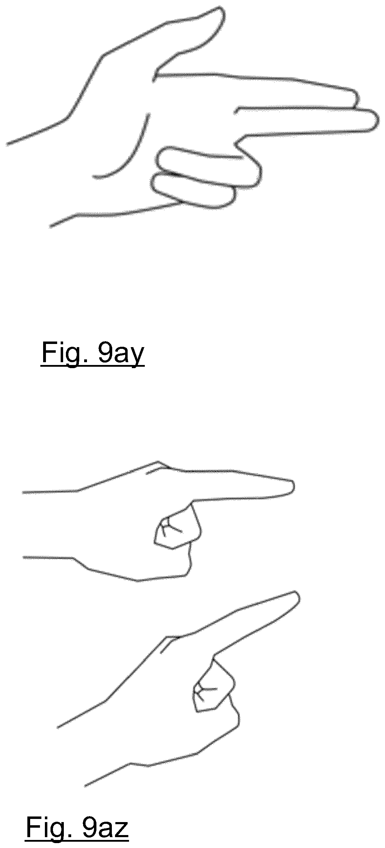

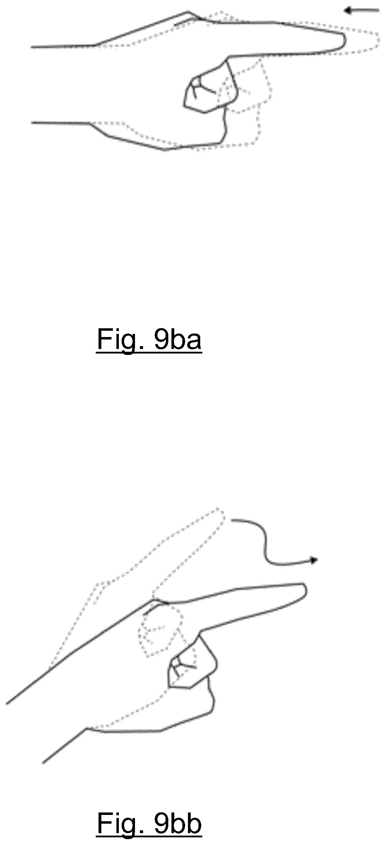

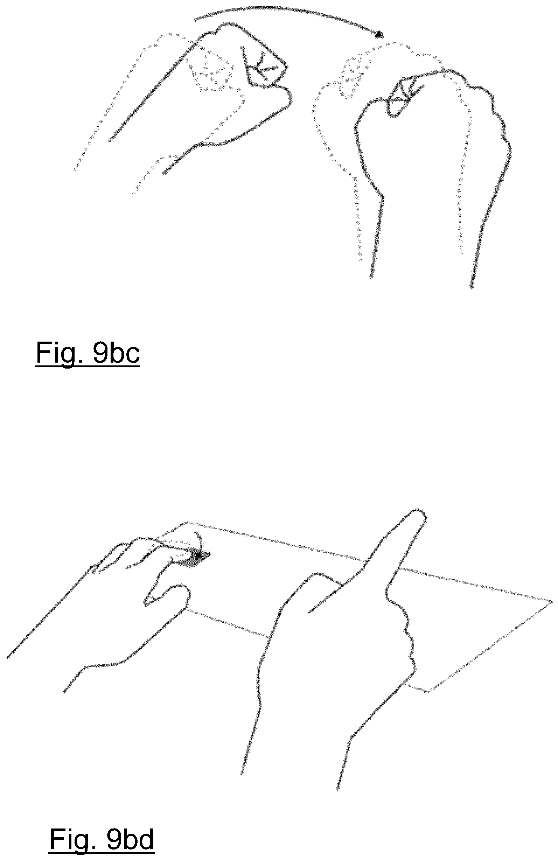

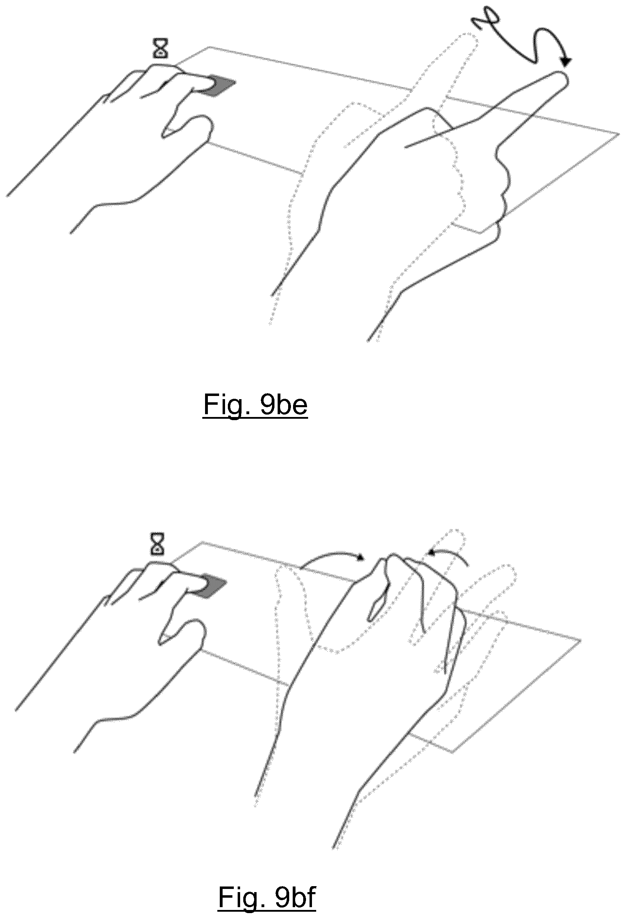

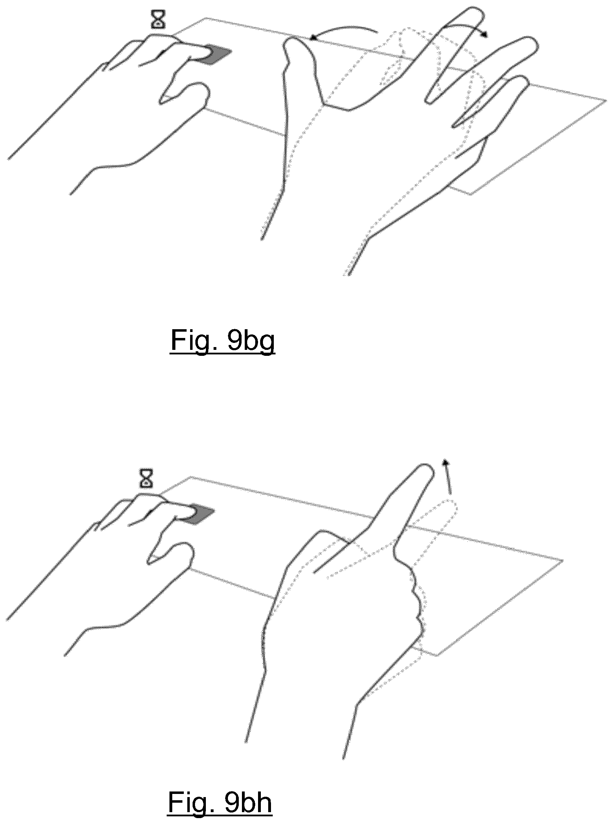

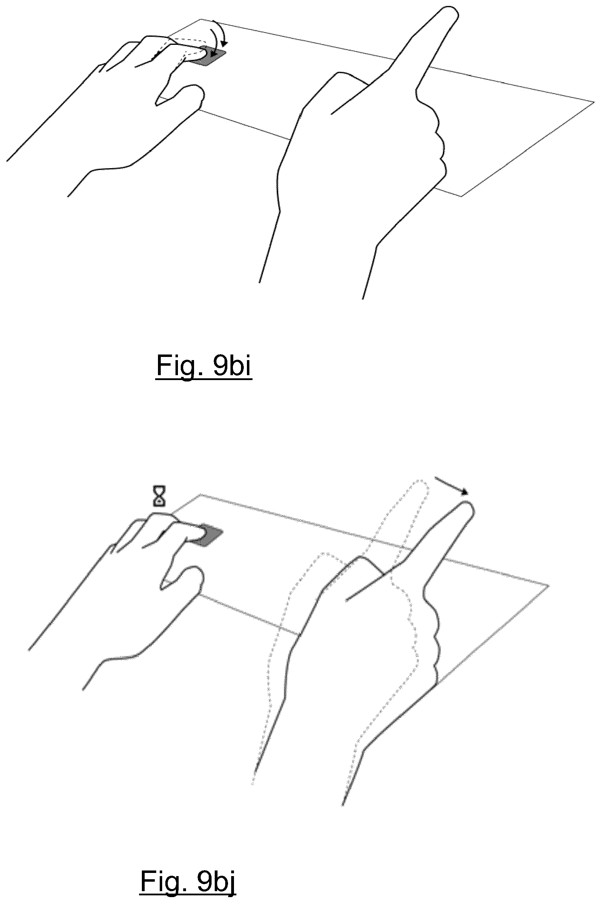

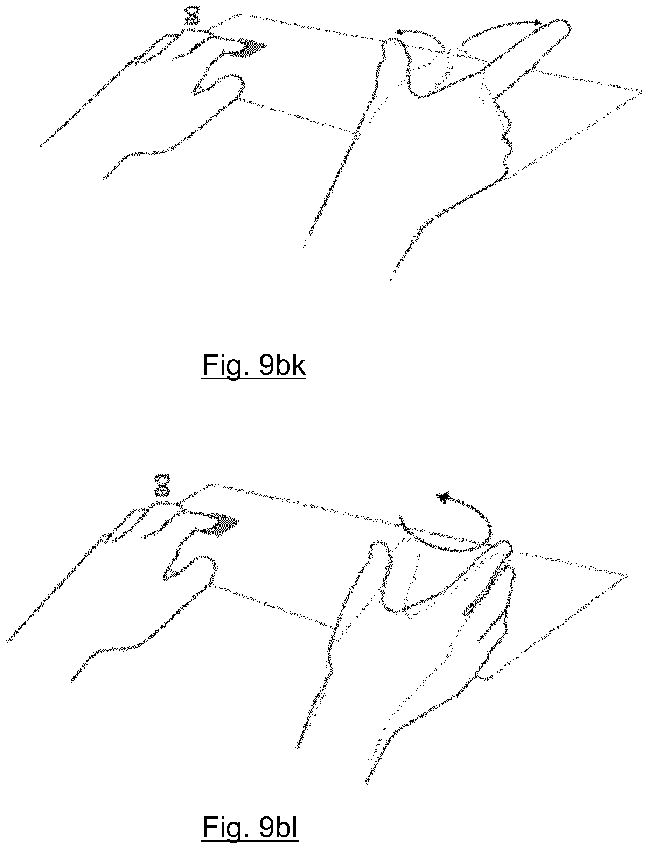

- Fig. 9aa-bl:: Exemplary touchless input gestures in accordance with embodiments of the invention.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

In the following, exemplary embodiments of computer devices in which aspects of the present invention may be practiced will be explained with reference to Figs. 1a-d. Fig. 1a illustrates an embodiment 100a in which the computer device 102 is a personal computer. The computer 102 is coupled to a display means 104 in the form of a computer monitor, to a keyboard 106 and to sensor means 108. Fig. 1b illustrates an embodiment 100b. Embodiment 100b differs from embodiment 100a in that the computer device 102 is a tablet with integrated display means 104 and sensor means 108. Fig. 1c illustrates an embodiment 100c in which the computer device 102 is integrated into a television set which also comprises the display means 104 and the sensor means 108. Fig. 1d illustrates an embodiment 100d in which the computer device is a portable computer 102. The portable computer 102 comprises a base housing 102a and a top cover 102b. The portable computer 102 is open, thereby revealing respective user-facing surfaces of the base housing 102a and top cover 102b. A display means 104 is arranged on the user-facing surface of the top cover 102b. A keyboard 106 is arranged on the user-facing surface of the base housing 102a. The portable computer 102 comprises sensor means 108 as part of a touchless gesture input system, which comprises in the illustrated embodiment first and second sensor devices which are arranged at or near opposing upper corners of the top cover 102b. However, the touchless gesture input system may comprise other sensor arrangements. In one variation of the embodiment 100d of Fig. 1d, the keyboard 106 is replaced with a touchscreen 106, and hence the portable computer 102 resembles the type disclosed in European patent application no. 23173257.9 titled "PORTABLE COMPUTER WITH VIRTUALIZED HUMAN-MACHINE INTERFACE", the contents of which are incorporated herein by reference. It should be mentioned that the concepts disclosed herein may also be practiced in other embodiments in various configurations, e.g., with integrated or external display means 104, keyboards 106 and/or sensor means 108.

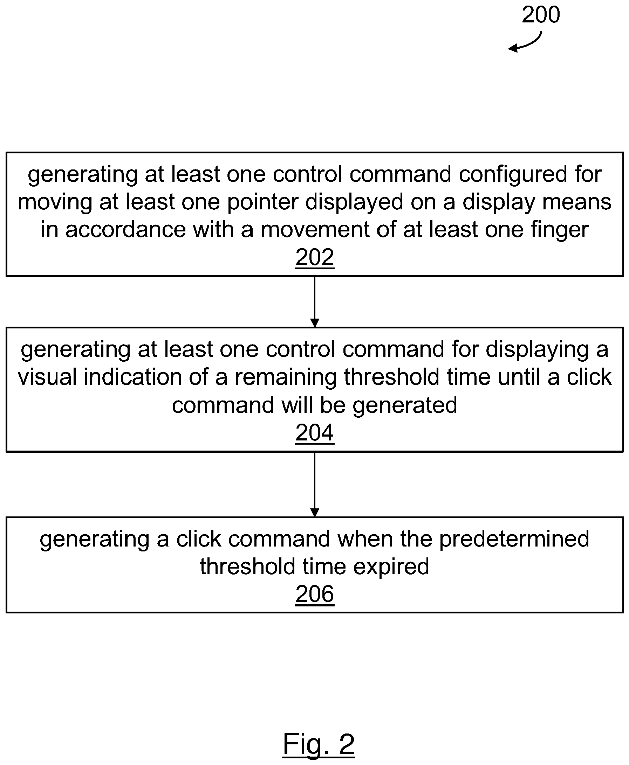

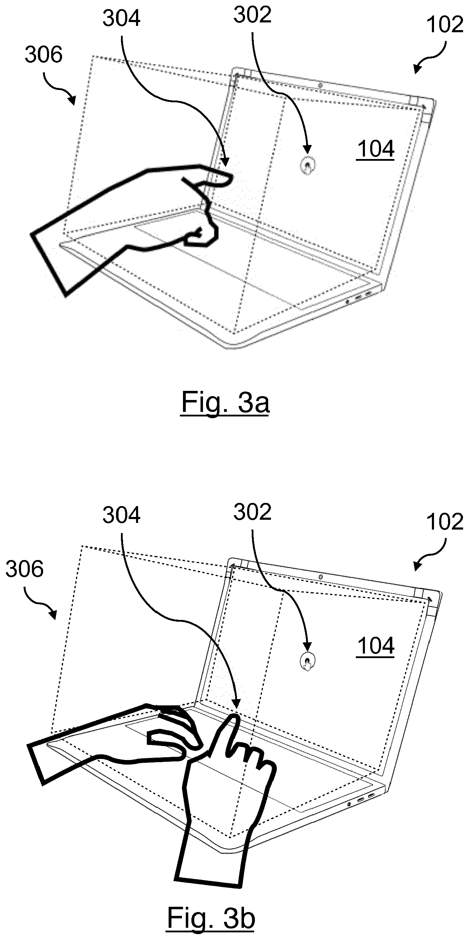

Fig. 2 illustrates a method 200 for touchless control of a computer device 102 relating to the "autoclick" functionality disclosed herein according to one exemplary embodiment. The method 200 comprises a step 202 of generating at least one control command configured for moving at least one pointer 302 (see, e.g., Fig. 3a) displayed on the display means 104 in accordance with a movement of at least one finger 304 (see, e.g., Fig. 3a) of a user. The movement is preferably a movement of the fingertip of the at least one finger 304. As can be seen in Fig. 3a, the at least one finger 304 is distanced from the display means 104. Referring back to Fig. 2, the method 200 comprises a step 206 of generating a click command in response to a user action, wherein the user action comprises a pre-defined gesture in which the user moves the at least one pointer 302 over at least one user interface element onto which the click command should be applied and causes the at least one pointer 302 to hover over the at least one user interface element for a predetermined threshold time, after which the click command is generated. The click command is generated after the at least one pointer 302 has hovered over the at least one user interface element for the predetermined threshold time without the user having to perform a clicking gesture.

Fig. 3a shows a so-called "Point and Click" posture in which the user holds the hand free in the air. However, this is only one example, and the user may take part in the concepts described in the present disclosure through other hand postures, such as resting a palm of the hand on a palmrest section of the laptop 102, as shown in Fig. 3b, just as one example.

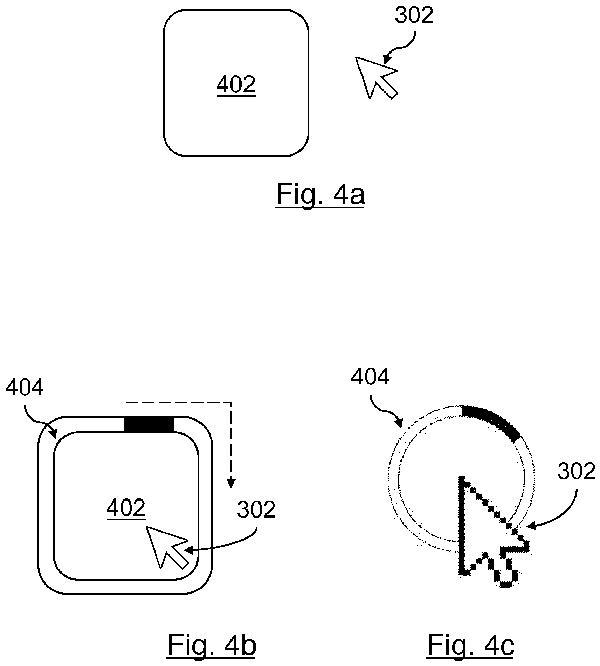

Fig. 4a illustrates a schematic representation of a user interface element 402 in the form of an icon. As explained elsewhere herein, an icon is only one of various examples of user interface elements 402. The icon 402 is in a default state because the pointer 302, in this example a mouse pointer, is placed next to the icon 402, i.e., it does not hover over the icon 402.

When the pointer 302 is moved over the icon 402, as illustrated in Fig. 4b, the icon 402 enters a hover state and displays a visual indication 404 of the remaining threshold time until the click command will be generated (see step 204 in Fig. 2). In the illustrated exemplary embodiment of Fig. 4b, the visual indication 404 is a frame around the icon 402 which fills up starting from the top in a clockwise direction (as indicated by the dashed arrow). This way, the visual indication 404 acts similar to a progress bar, indicating that the click command will be generated when the frame 404 is fully filled up. The skilled person will understand that other ways of indicating the remaining threshold time are possible. In particular, the rectangular form with rounded corners shown in Fig. 4b is only one of a wide variety of possibilities. Generally, any graphical representation is supported be it in the form of a circle, rectangle, or the like.

Fig. 4c shows a variation in which the visual indication 404 is arranged around the pointer 302 (instead of the user interface element 402) and moves with the pointer 302.

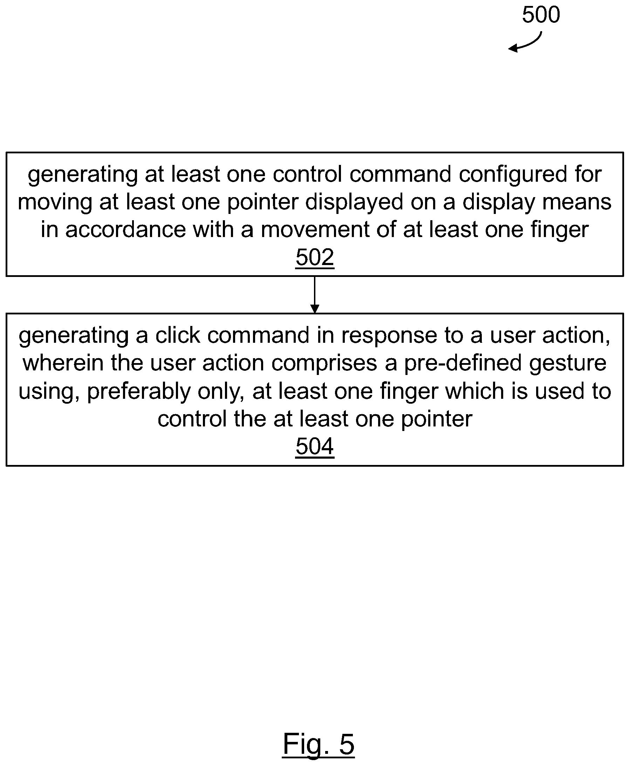

Fig. 5 illustrates a method 500 for touchless control of a computer device 102 relating to an alternative way of generating a click command according to one exemplary embodiment. The method 500 comprises a step 502 of generating at least one control command configured for moving at least one pointer 302 displayed on the display means 104 in accordance with a movement of at least one finger 304, preferably of the fingertip of the at least one finger 304, of a user. The at least one finger 304 is distanced from the display means 104. The method 500 comprises a step 504 of generating a click command in response to a user action, wherein the user action comprises a pre-defined gesture using, preferably only, the at least one finger 304 which is used to control the at least one pointer 302. The gesture may comprises one or more of: a straightening of the at least one finger 304, a snapping of the at least one finger 304 in the general direction of the display means 104, and a bending of the at least one finger 304.

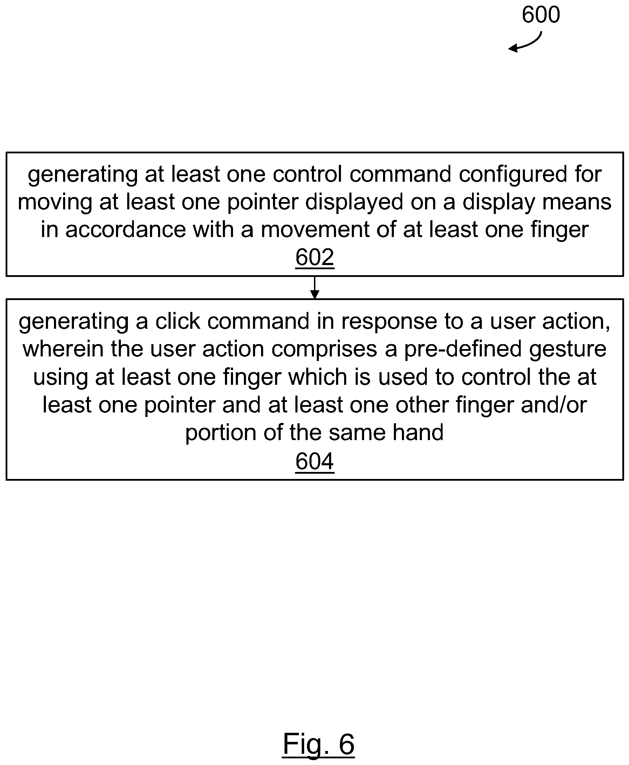

Fig. 6 illustrates a method 600 for touchless control of a computer device 102 relating to another alternative way of generating a click command according to one exemplary embodiment. The method 600 comprises a step 602 of generating at least one control command configured for moving at least one pointer 302 displayed on the display means 104 in accordance with a movement of at least one finger 304, preferably of the fingertip of the at least one finger 304, of a user. The at least one finger 304 is distanced from the display means 104. The method 600 comprises a step 604 of generating a click command in response to a user action, wherein the user action comprises a pre-defined gesture using the at least one finger 304 which is used to control the at least one pointer 302 and at least one other finger and/or portion of the same hand, in particular wherein the gesture comprises the user moving and/or snapping the tip of the thumb towards the index finger.

Irrespective of the particular way how a click command is generated (by simply holding the finger, by moving it forward, or the like; see the variants further above), certain embodiments may provide a so-called "magnetic effect" functionality which will now be described. It has turned out that some users may hover over a user interface element to indicate that this user interface element should be clicked or otherwise interacted with, but when initiating a click command the user may unintentionally move the pointer out of the user interface element, e.g., because the user is holding the finger in a tilted orientation with respect to the display. Therefore, certain embodiments may provide for keeping a user interface element the "active" user element even though the interface pointer moves out of the user interface element. The user interface element may stay the "active" user element until the interface pointer is moved over another user interface element. This way, a click command can be generated for a particular user interface element if it was hovered over but then the user lost contact unintentionally.

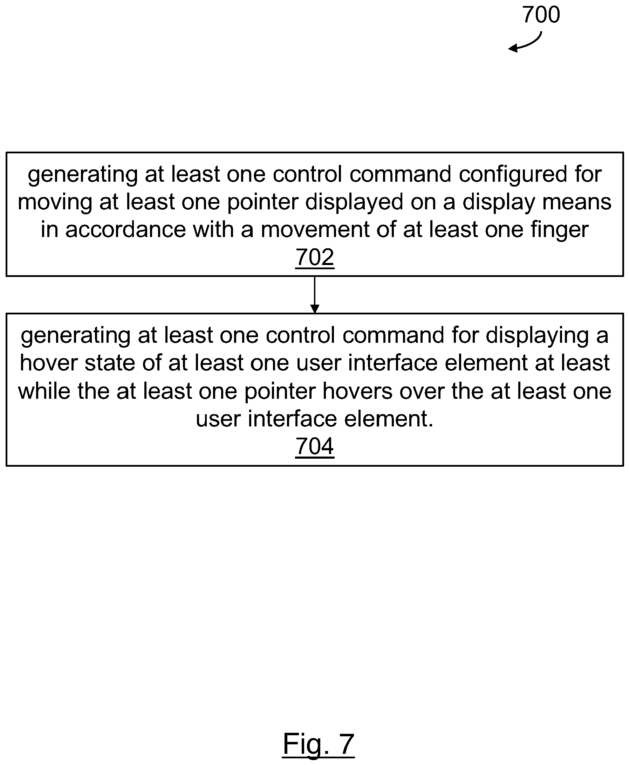

Fig. 7 illustrates a method 700 for touchless control of a computer device 102 relating to displaying a hover state of a user interface element according to one exemplary embodiment. The method 700 comprises a step 702 of generating at least one control command configured for moving at least one pointer 302 displayed on the display means 104 in accordance with a movement of at least one finger 304, preferably of the fingertip of the at least one finger 304, of a user. The at least one finger 304 is distanced from the display means 104. The method 700 comprises a step 704 of generating at least one control command for displaying a hover state of at least one user interface element 802 at least while the at least one pointer 302 hovers over the at least one user interface element 802.

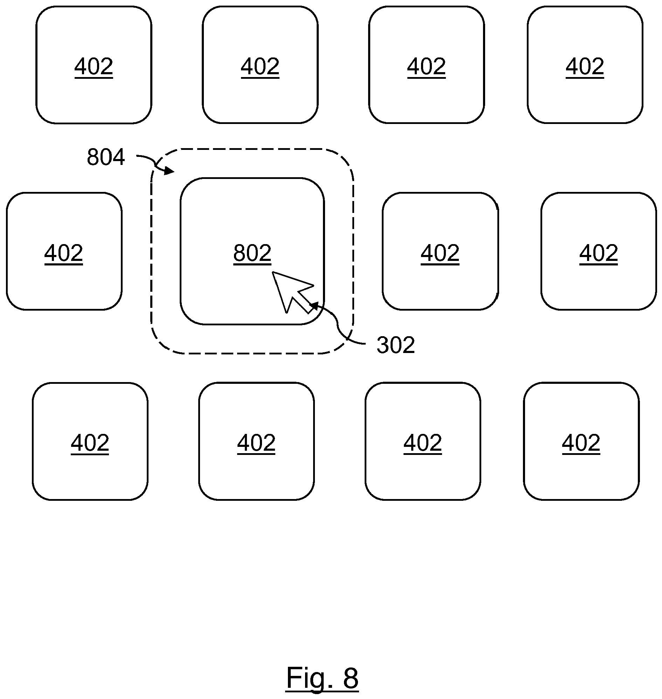

Fig. 8 illustrates a schematic representation of the hover state behavior according to an exemplary embodiment. As can be seen, a plurality of user interface elements 402 are arranged on a user interface in a 4 x 3 grid arrangement. The grid arrangement is only one example of an arrangement of user interface elements 402. The pointer 302 hovers over the user interface element 802, which has increased in size to indicate that it is in the hover state.

Fig. 8 also shows that the upper row of user interface elements 402 has slightly moved up, the lower row of user interface elements 402 has slightly moved down, and the user interface elements to the left and right of the user interface element 802 have slightly moved to the side, to make room for the enlarged user interface element 802. This re-arrangement of the remaining user interface elements 402 is only one of various examples. Other variations are possible, e.g., the user interface elements to the left and right of the user interface element 802 may not move to the side, if there is already enough room for the user interface element 802 to increase its size.

Fig. 8 also illustrates a hovering area 804 around the user interface element 802. The hovering area 804 is invisible in reality and hence drawn with a dashed line. The user interface element 802 displays the hovering state already when the at least one pointer 302 enters the hovering area 804.

Any of the methods described herein may also comprise a step of generating at least one control command for playing a sound in response to generating the click command and/or when the at least one user interface element is in the hover state.

Any of the methods described herein may also comprise a step of determining at least one of a plurality of different touchless gesture inputs performed by the user in an interaction space 306 (see Fig. 3a and 3b). The following table shows exemplary gestures, their function, a description, and a reference to a figure showing an example of the gesture:

| Gesture | Function | Description | Example |
|---|---|---|---|
| Swiping | List elements left/right | Switch from one element to another left/right | see Fig. 9a, 9b |
| | List elements up/down | Switch from one element to another up/down | see Fig. 9c, 9d |
| | Flicking | Quick selecting/swiping with momentum. Example: Album photos | see Fig. 9aa, 9ab, 9ac, 9ad |
| Pinching/ Spreading | Zoom in | Zooming in a browser page, text, map or the like | see Fig. 9ae |
| | Zoom out | Zooming out a browser page, text, map or the like | see Fig. 9af |
| | Scroll | Pinch/pluck and move left/right/up/down to scroll | see Fig. 9af |
| | Drag | Pinch/pluck and move left/right/up/down to drag or release | see Fig. 9af |
| | Activate | Pinch/pluck to select/activate an element | see Fig. 9af |
| Pointing | Move cursor | Control on screen control instead of mouse or track pad | see Fig. 9ag |
| | Point on a certain area | | see Fig. 9ah |
| | Moving/dragging element | Pointing like selecting and moving elements on a screen | see Fig. 9ai |
| | Selecting | Select element or set of elements by pointing | see Fig. 9aj |
| | Navigating | Navigating on a screen, in software, browsers or the like | see Fig. 9ag |
| | Scrolling | Scrolling up, down, left, right | see Fig. 9ak |
| Tapping | Click | Click to select an element | see Fig. 9al |
| | Select | Click / tap to select any active element | see Fig. 9al |
| | Auto click | Wait for some time while an element will be selected. Long press to activate extra menu. | see Fig. 9am |
| | Double click | Double click to make a special selection or calling a special menu. As example left, right mouse buttons | see Fig. 9an |
| Passive hand(s)/ finger(s) sign | Waving | Waving by hand to activate software, OS, or the like | see Fig. 9ao |
| | Agreement | Agree gesture, finger up | see Fig. 9ap |
| | Stopping | Stop playing a video - example: showing palm, fist clench. | see Fig. 9aq |
| | Playing | Play video/music continue | see Fig. 9ar |
| | Disagreement | Cancel or disagree with selection, activation, finger down | see Fig. 9as |
| | Counting | Show signs for counting | see Fig. 9at |
| | Smile / reaction | Send smiles by hand signs | see Fig. 9au |
| | Talking / writing | Show signs to talk or write text | see Fig. 9ar |
| Writing (hand(s), finger(s)) | Writing | Write text, make a signature | see Fig. 9ag |
| | Consequential selection | Select elements on a screen by a writing gesture. For example, select letters on a virtual keyboard | see Fig. 9aj |
| | Drawing | Use hand(s) or finger(s) to make drawing gestures | see Fig. 9ag |
| Active hand(s)/ finger(s) sign | Rotating | Rotate a selected element in 2D or 3D. Example: volume in sound application, 3D object on a screen | see Fig. 9av |
| | Grabbing | Grab and drag an element | see Fig. 9aw |
| | Release | Release grabbed/selected element | see Fig. 9ax |
| | Gaming | Shooting, magic signs, defense, look around, or the like | see Fig. 9ay |
| | Cooperation | More than one person each using one or more hands to work or play a game | see Fig. 9az |
| | Speed | Move figure(s) / hand(s) closer to the screen to speed up or farther away to slow down | see Fig. 9ah |
| | Distance | Keep figure(s) / hand(s) closer or further from the screen to define a distance in 3D | see Fig. 9ah |
| | Pulling | Pulling gesture in any axis. Example: play a game | see Fig. 9ba |
| | Pushing | Pushing gesture in any axis. Example: play a game | see Fig. 9ah |
| | Direction | Pointing to a direction. Example: car, plane, any object that should move, drive, fly, or the like | see Fig. 9bb |
| | Two-hands action | Rotate, push, pull, show other signs | see Fig. 9bc |
| Gesture + virtual button(s) | Selection | Use virtual keyboard and gesture to select element(s) | see Fig. 9bd |
| | Drawing | Use virtual keyboard and gesture to draw element(s) | see Fig. 9be |
| | Grabbing | Use virtual keyboard and gesture to grab element(s) | see Fig. 9bf |
| | Release | Use virtual keyboard and gesture to release element(s) | see Fig. 9bg |
| | Scrolling | Use virtual keyboard and gesture to scroll a page | see Fig. 9bh |
| | Tapping/Clicking | Use virtual keyboard and gesture to click/choose/select an element | see Fig. 9bi |
| | Dragging | Use virtual keyboard and gesture to drag an element or elements on a screen | see Fig. 9bj |
| | Zooming | Use virtual keyboard and gesture to zoom an element, text, map or the like | see Fig. 9bk |
| | Rotating | Use virtual keyboard and gesture to rotate element(s) in 2D or 3D | see Fig. 9bl |

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A method (200) for touchless control of a computer device (102), wherein the computer device (102) comprises and/or is communicatively coupled to display means (104), the method comprising:
generating (202) at least one control command configured for moving at least one pointer (302) displayed on the display means (104) in accordance with a movement of at least one finger (304), preferably of the fingertip of the at least one finger (304), of a user, while the at least one finger (304) is distanced from the display means (104); and
generating (206) a click command in response to a user action, wherein the user action comprises a pre-defined gesture in which the user moves the at least one pointer (302) over at least one user interface element (402) onto which the click command should be applied and causes the at least one pointer (302) to hover over the at least one user interface element (402) for a predetermined threshold time, after which the click command is generated.

2. The method of claim 1, wherein the click command is generated after the at least one pointer (302) has hovered over the at least one user interface element (402) for the predetermined threshold time without the user having to perform a clicking gesture.

3. The method of claim 1 or 2, further comprising:
generating (204) at least one control command for displaying, on the display means (104), a visual indication (404) of the remaining threshold time until the click command will be generated.

4. The method of claim 3, wherein displaying the visual indication (404) comprises animating the at least one user interface element (402) onto which the click command should be applied.

5. The method of claim 4, wherein animating the at least one user interface element (402) comprises animating a frame (404) of the at least one user interface element (402), in particular filling up the frame (404), in accordance with the remaining threshold time.

6. A method (500) for touchless control of a computer device (102), wherein the computer device (102) comprises and/or is communicatively coupled to display means (104), the method comprising:
generating (502) at least one control command configured for moving at least one pointer (302) displayed on the display means (104) in accordance with a movement of at least one finger (304), preferably of the fingertip of the at least one finger (304), of a user, while the at least one finger (304) is distanced from the display means (104); and
generating (504) a click command in response to a user action, wherein the user action comprises a pre-defined gesture using, preferably only, the at least one finger (304) which is used to control the at least one pointer (302), wherein the gesture comprises one or more of:
a straightening of the at least one finger (304);
a snapping of the at least one finger (304) in the general direction of the display means (104);
a bending of the at least one finger (304).

7. A method (600) for touchless control of a computer device (102), wherein the computer device (102) comprises and/or is communicatively coupled to display means (104), the method comprising:
generating (602) at least one control command configured for moving at least one pointer (302) displayed on the display means (104) in accordance with a movement of at least one finger (304), preferably of the fingertip of the at least one finger (304), of a user, while the at least one finger (304) is distanced from the display means (104); and
generating (604) a click command in response to a user action, wherein the user action comprises a pre-defined gesture using the at least one finger (304) which is used to control the at least one pointer (302) and at least one other finger and/or portion of the same hand, in particular wherein the gesture comprises the user moving and/or snapping the tip of the thumb towards the index finger.

8. A method (700) for touchless control of a computer device (102), wherein the computer device (102) comprises and/or is communicatively coupled to display means (104), the method comprising:
generating (702) at least one control command configured for moving at least one pointer (302) displayed on the display means (104) in accordance with a movement of at least one finger (304), preferably of the fingertip of the at least one finger (304), of a user, while the at least one finger (304) is distanced from the display means (104); and
generating (704) at least one control command for displaying a hover state of at least one user interface element (802) at least while the at least one pointer (302) hovers over the at least one user interface element (802).

9. The method of claim 8, wherein the hover state of the at least one user interface element (802) is displayed already when the at least one pointer (302) comes near the at least one user interface element (802).

10. The method of claim 9, wherein the at least one user interface element (802) comprises an invisible hovering area (804) which is larger than a visible area of the at least one user interface element (802), and wherein the hover state of the at least one user interface element (802) is displayed when the at least one pointer (302) enters the hovering area (804).

11. The method of any one of the preceding claims 8-10, wherein displaying the hover state comprises at least partly modifying an appearance of the at least one user interface element (802), in particular a size and/or shape and/or color of the at least one user interface element (802).

12. The method of claim 11, wherein at least partly modifying the appearance of the at least one user interface element (802) is performed depending on a direction from which the at least one pointer (302) has approached the at least one user interface element (802).

13. The method of any one of the preceding claims, further comprising:
determining at least one of a plurality of different touchless gesture inputs performed by the user in an interaction space (306);
wherein the plurality of different touchless gesture inputs comprise one or more of the following touchless gestures:
- swiping;
- pinching/spreading;
- pointing;
- tapping;
- passive hand finger sign;
- active hand finger sign;
- writing;
- drawing;
- mouse control.

14. A data processing apparatus, preferably an electronic device, more preferably a computer device (102), comprising means for carrying out the method of any one of claims 1-13.

15. A computer program or a computer-readable medium having stored thereon a computer program, the computer program comprising instructions which, when the program is executed by a computer, cause the computer to carry out the method of any one of claims 1-13.
